# DEMANDE DE BREVET EUROPEEN

(11) **EP 1 887 257 A1**
(43) Date de publication de la demande: **13.02.2008**
(21) Numéro de dépôt: 07301291.6
(22) Date de dépôt: 01.08.2007
(51) Int. Cl.: F16H 61/04, F16H 3/12

(54) **Dispositif et procedé de passage de la marche arrière pour boîte de vitesses manuelle pilotée**

(30) Priorité: 11.08.2006 FR 0607302
(71) Demandeur: PEUGEOT CITROËN AUTOMOBILES SA, 78140 Velizy-Villacoublay (FR)
(72) Inventeur: Schaeffer, Eric, 92250 La Garenne Colombes (FR); Valayer, Florent, 78570 Andresy (FR); Boukhalfa, Hichem, 94120 Fontenay Aux Roses (FR)

(57) **Abrégé**

L'invention concerne une boîte de vitesses de véhicule, notamment de véhicule automobile, comportant un arbre primaire (10) destiné à être entraîné en rotation par un moteur, un arbre intermédiaire (16) destiné à entraîner les roues du véhicule en marche arrière, un arbre de marche arrière (24), un manchon de crabotage de marche arrière (40) destiné à accoupler l'arbre de marche arrière (24) avec un pignon de marche arrière (20), la boîte comprenant, en outre, un organe de commande du manchon de crabotage (40) de marche arrière, un premier capteur (54) de mesure d'une grandeur représentative de la vitesse de rotation de l'arbre primaire, un deuxième capteur (56) de mesure d'une grandeur représentative de la vitesse de rotation de l'arbre intermédiaire.

La boîte de vitesse comporte en outre des moyens de pilotage de l'organe de commande du manchon de crabotage (40) vers une position de crabotage, et en ce que les moyens (59, 70) viennent en remplacement d'un synchroniseur de marche arrière en étant configurés de façon à empêcher le passage du manchon de crabotage (40) dans la position de crabotage bloquant le passage de la marche arrière de la boîte de vitesses tant que l'écart de vitesse entre le manchon de crabotage (40) de marche arrière et le pignon de marche arrière (20) est supérieur à un seuil déterminé.

Applications : boîte de vitesses manuelle pilotée (BVMP) pour véhicule automobile.

## Description

L'invention concerne une boîte de vitesses manuelle (ou mécanique) pilotée (BVMP) pour véhicule, notamment pour véhicule automobile, ainsi qu'un dispositif de la boîte de vitesses pour commander le passage de la marche arrière.

Les boites de vitesses mécaniques à architecture « classique » utilisent un synchroniseur afin de garantir un bon ressenti client lors du passage de la marche arrière.
Le synchroniseur de marche arrière assure une synchronisation en rotation entre un manchon de crabotage solidaire d'un arbre de marche arrière et un pignon de marche arrière monté fou sur cet arbre de marche arrière. Une fois que le manchon de crabotage et le pignon de marche arrière tournent à des vitesses de rotation proches, la solidarisation entre le pignon de marche arrière et le manchon de crabotage est effectuée par crabotage.
L'utilisation d'un synchroniseur permet d'éviter les craquements au moment du passage de la marche arrière, en garantissant le non crabotage du rapport tant qu'il y a une vitesse différentielle entre le manchon de crabotage et le pignon récepteur.
Cependant le coût, la masse et l'encombrement d'un synchroniseur sont pénalisants.

L'invention utilise les informations des capteurs présents dans une boite pilotée afin de supprimer le synchroniseur en le remplaçant par une stratégie de pilotage adaptée au passage de la marche arrière et, à cet effet l'invention propose,

une boîte de vitesses pour véhicule, notamment pour véhicule automobile, comportant un arbre primaire destiné à être entraîné en rotation par un moteur, un arbre secondaire comportant un pignon secondaire monté fou sur cet arbre secondaire, un arbre intermédiaire destiné à entraîner les roues du véhicule en marche arrière, le pignon secondaire, entraîné en rotation par un pignon moteur solidaire en rotation de l'arbre moteur, est engréné sur un pignon de marche arrière monté fou sur un arbre de marche arrière, un couplage en rotation entre l'arbre de marche arrière et l'arbre intermédiaire étant réalisé par deux autres pignons engrénés, l'un des deux autres pignons étant solidaire de l'arbre de marche arrière et l'autre de l'arbre intermédiaire, un manchon de crabotage de marche arrière destiné à accoupler l'arbre de marche arrière avec le pignon de marche arrière comportant des crabots, la boîte comprenant, en outre, un organe de commande du manchon de crabotage de marche arrière, un premier capteur de mesure d'une grandeur représentative de la vitesse de rotation de l'arbre primaire, un deuxième capteur de mesure d'une grandeur représentative de la vitesse de rotation de l'arbre intermédiaire,
caractérisé en ce qu'il comporte des moyens de pilotage de l'organe de commande du manchon de crabotage apte à être déplacé en translation axiale vers le pignon de marche arrière d'une position neutre dans laquelle le pignon de marche arrière est libre en rotation par rapport à l'arbre de marche arrière vers une position de crabotage dans laquelle le manchon solidarise en rotation le pignon de marche arrière et l'arbre de marche arrière, les moyens étant configurés de façon à empêcher le passage du manchon de crabotage dans la position de crabotage bloquant le passage de la marche arrière de la boîte de vitesses tant que l'écart de vitesse entre le manchon de crabotage de marche arrière et le pignon de marche arrière est supérieur à un seuil prédéterminé.

Avantageusement les moyens de pilotage de l'organe de commande du manchon de crabotage comportent une unité de contrôle recevant au moins les informations des premier et deuxième capteurs, respectivement de vitesse de l'arbre primaire et de vitesse de l'arbre intermédiaire, ainsi qu'une information d'ordre de passage de la marche arrière, l'unité de contrôle fournissant une information de commande de l'organe de commande du manchon de crabotage.

Dans une réalisation, la boîte de vitesses comporte un capteur de position de l'organe de commande fournissant une information d'enclenchement de la marche arrière à l'unité de contrôle.

Dans une autre réalisation, le deuxième capteur de mesure est un capteur de vitesse du véhicule, la vitesse du véhicule étant directement liée à la vitesse de l'arbre des roues.

L'invention concerne aussi un procédé d'enclenchement de la marche arrière de la boîte de vitesse selon l'invention comportant l'unité de contrôle de l'organe de commande du manchon de crabotage de marche arrière, l'unité de contrôle recevant au moins les informations des premier et deuxième capteurs de vitesse, respectivement de vitesse de l'arbre primaire et de vitesse de l'arbre intermédiaire ainsi qu'une information d'ordre de passage de la marche arrière et fournissant une information de commande de l'organe de commande du manchon de crabotage,
caractérisé en ce que l'unité de contrôle compare l'écart de vitesse de rotation, à chaque instant, entre la vitesse de rotation du manchon de crabotage de marche arrière et la vitesse de rotation des crabots du pignon de marche arrière et, lorsque l'ordre de passage de la marche arrière est appliqué à l'unité de contrôle (pilotage de l'actionneur de marche arrière vers le capteur de position) :
- tant que l'écart de vitesse de rotation entre le manchon de crabotage de marche arrière et les crabots du pignon de marche arrière est supérieure à un seuil déterminé, le passage de la marche arrière est bloqué,
- lorsque cet écart de vitesse devient inférieur ou égal au seuil , l'unité de contrôle fournit une commande à l'organe de commande du manchon de crabotage, faisant glisser le manchon de crabotage vers le pignon de marche arrière produisant le couplage en rotation du pignon de marche arrière avec l'arbre de marche arrière et l'enclenchement de la marche arrière.

Avantageusement, dans le procédé d'enclenchement de la marche arrière, la vitesse du manchon de crabotage et la vitesse des crabots du pignon fou de marche arrière sont respectivement calculées l'une, à partir de la vitesse de l'arbre intermédiaire et l'autre à partir de la vitesse de l'arbre primaire, en tenant compte des démultiplications dues aux couplages des pignons moteur, secondaire, de marche arrière.

Dans une réalisation du procédé d'enclenchement de la marche arrière, la vitesse de rotation des roues et donc du manchon de crabotage est déduite du capteur de vitesse du véhicule.

L'invention sera mieux comprise par la description d'un exemple de réalisation d'une boîte de vitesses selon l'invention à l'aide de dessins annexés dans lesquels :
- la figure 1 représente un schéma partiel de la boîte de vitesses selon l'invention pour véhicule automobile; et
- la figure 2 montre un schéma de principe d'un dispositif de commande pour actionner le manchon de crabotage de marche arrière de la boîte de vitesses de la figure 1.

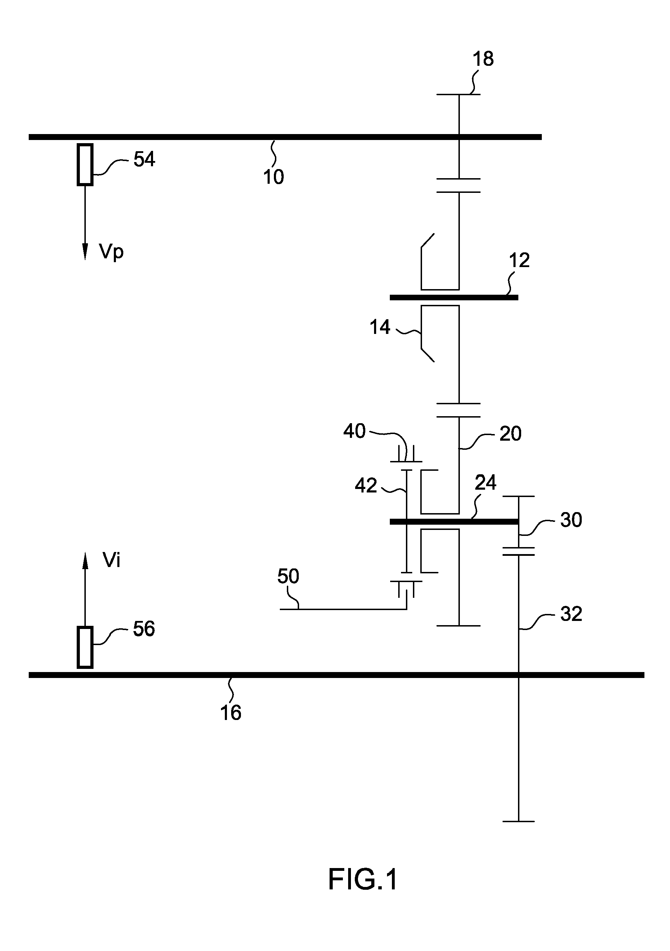

La figure 1 représente un schéma partiel de la boîte de vitesses selon l'invention pour véhicule automobile. Le schéma de la figure 1 montre les élements impliqués dans la configuration de marche arrière de la boîte de vitesses.

La boîte de vitesses de la figure 1 comporte un arbre primaire 10 destiné à être entraîné en rotation par un moteur (non représenté) par l'intermédiaire de l'embrayage du véhicule (non représenté), un arbre secondaire 12 comportant un pignon secondaire 14 monté fou sur cet arbre secondaire 12, un arbre intermédiaire 16 destiné à entraîner les roues du véhicule (non représentées) en marche arrière.

Le pignon secondaire 14, entraîné en rotation par un pignon moteur 18 solidaire en rotation de l'arbre moteur 10, est engréné sur un pignon de marche arrière 20 monté fou sur un arbre de marche arrière 24.

Un couplage en rotation entre l'arbre de marche arrière 24 et l'arbre intermédiaire 16 est réalisé par deux autres pignons 30, 32 engrénés, l'un 30 des deux autres pignons étant solidaire de l'arbre de marche arrière 24 et l'autre 32 de l'arbre intermédiaire 16.

La boîte de vitesses comporte un manchon de crabotage 40 de marche arrière destiné à accoupler l'arbre de marche arrière 24 avec le pignon à crabots de marche arrière 20. A cet effet, le manchon de crabotage 40 comporte des crabots 42 solidaires en rotation de l'arbre de marche arrière 24, le manchon 40 pouvant être entraîné en translation sur l'arbre de marche arrière 24 par l'action d'une fourchette de crabotage 50.

Le glissement du manchon 40 vers le pignon à crabots 20 de marche arrière entraîne le couplage en rotation dudit pignon de marche arrière 20 avec l'arbre de marche arrière 24.

La boîte de vitesses comporte en outre un premier capteur 54 de mesure d'une grandeur représentative de la vitesse de rotation Vp de l'arbre primaire 10, un deuxième capteur 56 de mesure d'une grandeur représentative de la vitesse de rotation Vi de l'arbre intermédiaire 16.

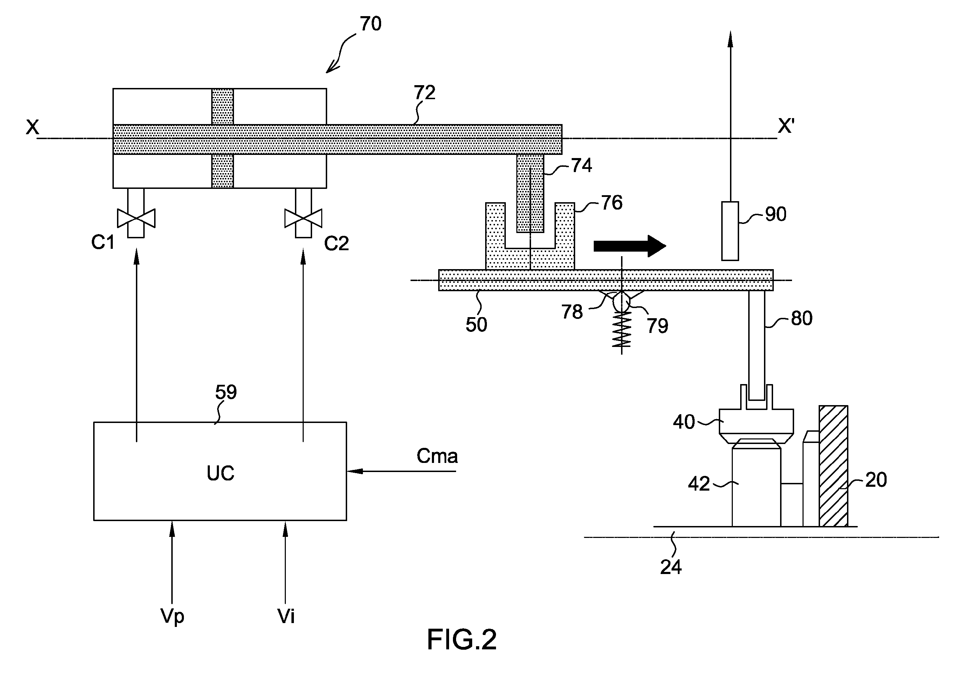

La figure 2 montre un schéma de principe d'un dispositif de commande pour actionner le manchon de crabotage de marche arrière de la boîte de vitesses de la figure 1.

Sur cette figure, les mêmes éléments sont désignés par les mêmes repères.

Le dispositif de commande comporte une unité centrale UC 59, un actionneur 70 ayant un arbre de commande 72 selon un axe XX' pouvant être déplacé dans un sens, par une commande C1 de l'actionneur, vers une position d'enclenchement de la marche arrière ou, dans le sens opposé par une commande C2 de l'actionneur, vers une position neutre marche arrière non enclenchée.

L'arbre de commande 72 comporte, du côté d'une de ses extrémités, un doigt de commande 74 de la fourchette 50 par l'intermédiaire d'une crosse de commande 76 solidaire d'une des extrémités de la fourchette 50 comportant, du côté de son autre extrémité, un doigt de crabotage 80 inséré dans une rainure du manchon de crabotage 40 de la boîte de vitesses.

La fourchette 50 comporte entre ses deux extrémités un moyen d'indexage formant un creux 78 pour le positionnement d'une bille 79 de centrage en position neutre de la fourchette 50, cette position neutre correspondant à la marche arrière non enclenchée.

Le dispositif de commande comporte, en outre, un capteur de position 90 de la fourchette 50 indiquant l'enclenchement de la marche arrière à l'unité de contrôle UC 59.

Nous allons par la suite décrire le fonctionnement de la boîte de vitesses selon l'invention.

L'unité de contrôle UC 59 reçoit au moins les informations des premier 54 et deuxième 56 capteurs respectivement de vitesse Vp de l'arbre primaire 10 et de vitesse Vi de l'arbre intermédiaire 16 ainsi qu'une information Cma d'ordre de passage de la marche arrière et fournit des informations de commande C1, C2 de l'actionneur 70 du dispositif de commande de la marche arrière.

L'unité de contrôle UC 59 compare l'écart de vitesses de rotation à chaque instant entre la vitesse de rotation Vm du manchon de crabotage 40 de marche arrière et la vitesse de rotation Vcr des crabots du pignon de marche arrière 20.

La vitessse de rotation Vm du manchon de crabotage est calculée sans difficulté à partir de la vitesse Vi de l'arbre intermédiaire 16 et, la vitesse de rotation Vcr des crabots du pignon fou de marche arrière 20 à partir de la vitesse de l'arbre primaire 10 en tenant compte des démultiplications dues au couplages des pignons moteur 18, secondaire 12, de marche arrière 20.

Lorsque l'ordre de passage Cma de la marche arrière est appliqué à l'unité de contrôle (pilotage de l'actionneur de marche arrière vers le capteur de position 90) :
- tant que l'écart ΔV de vitesse entre le manchon de crabotage 40 de marche arrière et les crabots du pignon récepteur de marche arrière 20 est supérieur à un seuil déterminé (prise en compte des contraintes mécaniques et acoustique), le passage de rapport est bloqué, il ne devient effectif que si le delta est inférieur ou égal au seuil ;
- lorsque cet écart de vitesse devient inférieur ou égal au seuil , l'unité de contrôle UC 59 fournit la commande C1 de l'actionneur 70, vers la position d'enclenchement de la marche arrière (vers la droite sur la figure 2). L'arbre de commande 72 de l'actionneur 70 déplace la fourchette 50 dans le même sens par l'action du doigt de commande 74 de l'arbre de commande 72 sur la crosse 76 de la fourchette 50 . La fourchette 50, en se déplaçant vers la position d'enclenchement de la marche arrrière, fait glisser le manchon de crabotage 40 par l'action du doigt de crabotage 80 vers le pignon de marche arrière 20 ce qui produit le crabotage, c'est-à-dire, le couplage en rotation du pignon de marche arrière 20 avec l'arbre de marche arrière 24 et l'enclenchement de la marche arrière.

Pour le déclenchement de la marche arrière, l'unité centrale UC 59 fournit à l'actionneur 70 la commande C2 produisant le déplacement de son arbre de commande 72 dans le sens inverse de l'enclenchement de la marche arrière (vers la gauche sur la figure 2) produisant le découplage du manchon de crabotage 40 du pignon de marche arrière 20.

Dans une autre réalisation, la vitesse de rotation des roues et donc du manchon de crabotage 40 est déduit du capteur de vitesse du véhicule.

L'utilisation du capteur de vitesse 54 de l'arbre primaire 10 (présent sur une boîte manuelle pilotée) associé au capteur de vitesse véhicule, permet de calculer en permanence l'écart de vitesse entre le manchon de crabotage 40 et le pignon fou 20 de marche arrière.

Lors d'un passage de neutre vers marche arrière ou de la première vers la marche arrière, la vitesse de l'arbre primaire chute d'elle-même et ce dès le débrayage de la boîte de vitesses par rapport au moteur.

En effet, le couple de traînée de la boîte de vitesses est suffisant à faire chuter la vitesse de l'arbre primaire 10.

L'invention consiste à n'autoriser le crabotage du rapport de marche arrière que lorsque l'écart de régime entre le manchon de crabotage 40 et le pignon fou 20 de marche arrière atteint un seuil déterminé.

## Revendications

1. Boîte de vitesses pour véhicule, notamment pour véhicule automobile, comportant un arbre primaire (10) destiné à être entraîné en rotation par un moteur, un arbre secondaire (12) comportant un pignon secondaire (14) monté fou sur cet arbre secondaire (12), un arbre intermédiaire (16) destiné à entraîner les roues du véhicule en marche arrière, le pignon secondaire (14), entraîné en rotation par un pignon moteur (18) solidaire en rotation de l'arbre moteur (10), est engréné sur un pignon de marche arrière (20) monté fou sur un arbre de marche arrière (24), un couplage en rotation entre l'arbre de marche arrière (24) et l'arbre intermédiaire étant réalisé par deux autres pignons (30), (32) engrénés, l'un des deux autres pignons étant solidaire de l'arbre de marche arrière (24) et l'autre de l'arbre intermédiaire (12), un manchon de crabotage de marche arrière (40) destiné à accoupler l'arbre de marche arrière (24) avec le pignon de marche arrière (20) comportant des crabots, la boîte comprenant, en outre, un organe de commande du manchon de crabotage (40) de marche arrière, un premier capteur de mesure d'une grandeur représentative de la vitesse de rotation de l'arbre primaire, un deuxième capteur de mesure d'une grandeur représentative de la vitesse de rotation de l'arbre intermédiaire,
**caractérisé en ce qu'**il comporte des moyens de pilotage (59, 70) de l'organe de commande (50) du manchon de crabotage (40) apte à être déplacé en translation axiale vers le pignon de marche arrière (20) d'une position neutre dans laquelle le pignon de marche arrière (20) est libre en rotation par rapport à l'arbre de marche arrière (24) vers une position de crabotage dans laquelle le manchon (40) solidarise en rotation le pignon de marche arrière (20) et l'arbre de marche arrière (24), et **en ce que** les moyens (59, 70) viennent en remplacement d'un synchroniseur de marche arrière en étant configurés de façon à empêcher le passage du manchon de crabotage dans la position de crabotage bloquant le passage de la marche arrière de la boîte de vitesses tant que l'écart (ΔV) de vitesse entre le manchon de crabotage de marche arrière (40) et le pignon de marche arrière (20) est supérieur à un seuil déterminé.

2. Boîte de vitesses selon la revendication 1, **caractérisée en ce que** les moyens de pilotage de l'organe de commande (50) du manchon de crabotage (40) comportent une unité de contrôle UC (59) recevant au moins les informations des premier (54) et deuxième (56) capteurs, respectivement de vitesse (Vp) de l'arbre primaire (10) et de vitesse (Vi) de l'arbre intermédiaire (12), ainsi qu'une information (Cma) d'ordre de passage de la marche arrière, l'unité de contrôle (UC) (59) fournissant une information de commande (C1, C2) de l'organe de commande du manchon de crabotage (40).

3. Boîte de vitesses selon la revendication 2, **caractérisée en ce qu'**elle comporte un capteur de position (90) de l'organe de commande (50) fournissant une information d'enclenchement de la marche arrière à l'unité de contrôle (UC) (59).

4. Boîte de vitesses selon l'une des revendications 1 à 3, **caractérisée en ce que** le deuxième capteur (56) est un capteur de vitesse du véhicule, la vitesse du véhicule étant directement liée à la vitesse de l'arbre des roues.

5. Procédé d'enclenchement de la marche arrière d'une boîte de vitesses selon l'une des revendications 1 à 4 comportant l'unité de contrôle UC (59) de l'organe de commande (50) du manchon de crabotage (40) de marche arrière, l'unité de contrôle (UC) (59) recevant au moins les informations des premier (54) et deuxième (56) capteurs de vitesse, respectivement de vitesse (Vp) de l'arbre primaire (10) et de vitesse (Vi) de l'arbre intermédiare (16) ainsi qu'une information (Cma) d'ordre de passage de la marche arrière et fournissant une information de commande de l'organe de commande du manchon de crabotage (40),
**caractérisé en ce que** l'unité de contrôle (UC) (59) compare l'écart de vitesse de rotation à chaque instant entre la vitesse de rotation (Vm) du manchon de crabotage (40) de marche arrière et la vitesse de rotation (Vcr) des crabots du pignon de marche arrière (20) et, lorsque l'ordre de passage de la marche arrière est appliqué à l'unité de contrôle (UC) (59) :
- tant que l'écart (ΔV) de vitesses de rotation entre le manchon de crabotage (40) de marche arrière et les crabots du pignon de marche arrière (20) est supérieur à un seuil déterminé, le passage de la marche arrière est bloqué,
- lorsque cet écart de vitesse (ΔV) devient inférieur ou égal au seuil, l'unité de contrôle (UC) (59) fournit une commande à l'organe de commande du manchon de crabotage, faisant glisser le manchon de crabotage vers le pignon de marche arrière produisant le couplage en rotation du pignon de marche arrière (20) avec l'arbre de marche arrière (24) et l'enclenchement de la marche arrière.

6. Procédé d'enclenchement de la marche arrière selon la revendication 5, **caractérisé en ce que** la vitesse (Vm) du manchon de crabotage (40) et la vitesse (Vcr) des crabots du pignon fou de marche arrière (20) sont respectivement calculées l'une, à partir de la vitesse (Vi) de l'arbre intermédiare (16) et l'autre à partir de la vitesses (Vp) de l'arbre primaire (10), en tenant compte des démultiplications dues aux couplages des pignons moteur (18), secondaire (12), de marche arrière (20).

7. Procédé d'enclenchement de la marche arrière selon l'une des revendications 5 ou 6, **caractérisé en ce que** la vitesse de rotation des roues, et donc du manchon de crabotage (40), est déduite du capteur de vitesse du véhicule.
